# EUROPEAN PATENT SPECIFICATION

(11) **EP 1 759 168 B1**
(45) Date of publication and mention of the grant of the patent: **03.06.2009**
(21) Application number: 04808462.8
(22) Date of filing: 17.12.2004
(51) Int. Cl.: G01B 11/16

(54) **MONITORING DEVICE FOR ROTATING BODY**
ÜBERWACHUNGSEINRICHTUNG FÜR EINEN ROTIERENDEN KÖRPER
DISPOSITIF DE CONTROLE DE CORPS ROTATIF

(30) Priority: 14.05.2004 KR 2004034252
(43) Date of publication of application: 07.03.2007
(73) Proprietor: Korea Institute of Science and Technology, Seoul 136-791 (KR)
(72) Inventor: HWANG, Yoha, Songpa-gu, Seoul, 138-798 (KR); LEE, Sang Bae, Nowon-gu, Seoul, 139-798 (KR); LEE, Jong Min, Gwangmyeong-si, Gyeonggi-do, 423-736 (KR)
(74) Representative: Schorr, Frank Jürgen
(86) International application number: PCT/KR2004/003331
(87) International publication number: WO 2005/111537

(56) References cited:
- JP-A- 11 201 735
- JP-A- 11 201 735
- JP-A- 2001 133 114
- JP-A- 2001 183 114
- KR-A- 2003 093 739
- US-A- 5 914 972
- US-A1- 2003 165 176

## Description

The present invention relates to a monitoring device for a rotating body, and more particularly to a monitoring device which detects defects or breakdowns of a rotating body, such as a flywheel, a rotor of a helicopter, etc., by using a fiber Bragg grating sensor.

A rotating body is an important component of a mechanical apparatus, such as a flywheel of a flywheel energy storage system, a rotor of a helicopter, a turbine blade and so on. Therefore, it is very important to monitor the rotating body to detect any defects or breakdowns in order to prevent unexpected accidents. One method of monitoring the rotating body during operation is to mount sensors like strain-gauges directly to the rotating body. However, such method has a problem in that it is difficult to supply power to the sensors and to transmit signals from the sensors to a control portion, which is located away from the rotating body.

A slip ring, which is mounted to a rotating shaft supporting the rotating body, is used in the method of supplying power to the sensors and transmitting the signals to the control portion. Cables of the sensors are collected to the slip ring and connected thereto. However, a problem typically results as the contact between a rotor and a stator of the slip ring must be constant. Further, wear and noise usually occur due to such contact. Moreover, if the rotating body has a plurality of points to be monitored, such as a turbine, the installation and wiring of the slip ring become highly limited.

Another method of monitoring the rotating body is to mount a signal processing unit and a battery together with the sensors to the rotating body. However, the battery must be periodically replaced, which can be a hassle. Further, mounting the above monitoring equipment to the high-speed rotating body can be extremely difficult due to the weight and size of the equipment.

On the other hand, there is an indirect monitoring method of mounting the sensor to an interconnected component, which is located adjacent to the rotating body. For example, an accelerometer or a gap sensor that is mounted to a housing of a bearing, which supports the rotating body, can detect vibration of the rotating body. However, it is very difficult to show a link between the vibration signals and the indications of defect or breakdown of the rotating body, and to further detect the deformation of the rotating body, in an early step with the above indirect monitoring method.

Japanese patent application JP 2001-183114 A discloses a measuring instrument which measures the strain of a rotary body such as blades of an aerogenerator windmill. The known instrument is equipped with a light source which projects light for measurement from a fixed element into a fiber Bragg diffraction grating which is fitted to the rotary body and reflects light of wavelength corresponding to the strain of the rotary body, means for transmitting a signal based upon the light reflected by the fiber Bragg diffraction grating back to the fixed element, and an arithmetic unit which calculates the strain of the rotary body according to the signal based upon the reflected light. A portion of the fiber Bragg diffraction grating is arranged at the center of the shaft carrying the rotary body.

US-A-5 914 972 describes a technique for coupling light from a fiber optic laser source into a fiber Bragg grating sensor. A collimating and focusing means in the form of a lens is associated to each of the fibers which directs parallel light into the fiber and collimates light exiting the fiber into a parallel light beam.

It is an object of the present invention to overcome problems of the prior art occurring when no hole can be formed in the rotating shaft.

According to the invention as defined in claim 1, the fiber Bragg grating sensor extends toward the end of the rotating shaft while being bonded on an outer surface of the rotating shaft and an accommodating member is coupled to the end of the rotating shaft for guiding the fiber Bragg grating sensor thereinto so that the end of the fiber Bragg grating sensor is positioned at the center of the rotating shaft, wherein the accommodating member is equipped with a collimating and focusing means.

The above object and features of the present invention will become more apparent from the following description of the preferred embodiment given in conjunction with the accompanying drawings.
Fig. 1 schematically shows a flywheel to which a monitoring device for a rotating body is installed.
Figs. 2 and 3 show embodiments with the fiber Bragg grating sensor being fixed to the outer surface of the rotating shaft.
Fig. 4 shows an embodiment of the present invention.

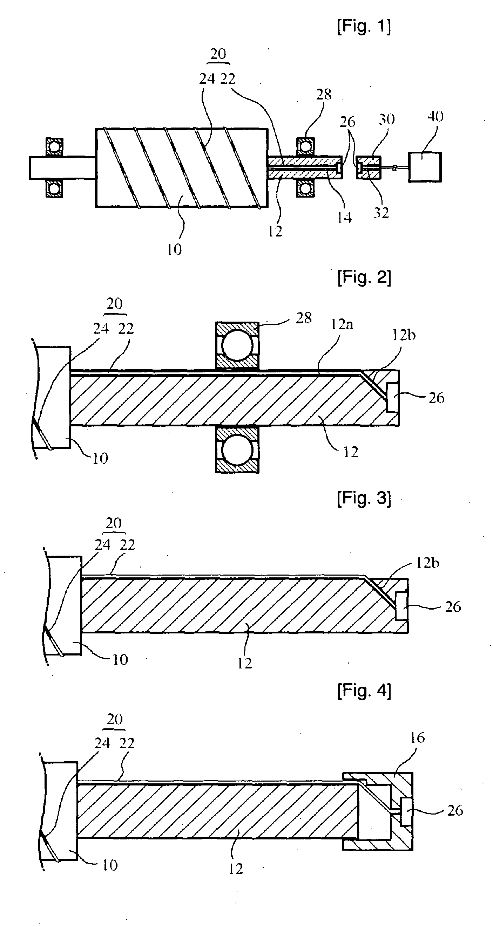

Fig. 1 schematically shows a flywheel of a flywheel energy storage system to which a monitoring device for a rotating body is installed.

As shown in the drawing, rotating shafts 12 are coupled to the central portions of the both ends of a cylindrical flywheel 10. The rotating shafts 12 rotate together with the flywheel 10 while being supported by bearings 28. In order to monitor the flywheel 10 in real time during the rotation, a fiber Bragg grating (FBG) sensor 20 is wound around the flywheel 10 in a spiral shape.

As already known, the FBG sensor 20 has an optical fiber 22 and a plurality of Bragg gratings 24, which are formed at the optical fiber 22. When light passes through the FBG sensor 20, each of the Bragg gratings 24 reflects the light that has the frequency satisfying its own Bragg condition, but allows the light having other frequency to pass through. Generally, the frequency satisfying the Bragg condition is called a Bragg frequency. If an ambient temperature of the FBG sensor 20 varies and a tensional or compressional force is applied to the FBG sensor 20, the refractive index or the length of the optical fiber 22 is changed. Thus, the Bragg frequency is also changed. As reported, 1% tension of the optical fiber 22 results in about 12nm variation of the Bragg frequency's wavelength, 1% compression of the optical fiber 22 results in about 32nm variation of the Bragg frequency's wavelength, and 100°C temperature variation results in about 1.1nm variation of the Bragg frequency's wavelength. Accordingly, the ambient temperature, tension, compression or bending can be detected by measuring the frequencies of the light, which is reflected from the Bragg gratings 24 of the FBG sensor 20.

The optical fiber 22 (hereinafter, it will be referred to as a first optical fiber) of the FBG sensor 20 is attached to a circumference of the flywheel 10 (in a spiral shape) by means of an epoxy resin, etc. The optical fiber 22 is fittingly inserted into a through-hole 14, which is formed axially throughout the rotating shaft 12 at its central portion. One end of the optical fiber 22 is disposed at the center of the end of the rotating shaft 12. Conventionally, the optical fiber 22 is too thin and light to affect the rotation of the flywheel 10 and the rotating shaft 12. Further, a balancing process may be performed after attaching the FBG sensor 20 to the flywheel 10. On the other hand, the FBG sensor 20 may be placed inside the flywheel 10 when manufacturing the flywheel 10.

An element 30, which is fixedly mounted opposite to the rotating shaft 12 and placed apart therefrom in the flywheel energy storage system, is provided with a light-transmitting means (i.e., a second optical fiber 32). The end of the second optical fiber 32 is aligned with the end of the first optical fiber 22. The second optical fiber 32 extends outward of the flywheel energy storage system and is connected to a data processing unit 40 for calculating the deformation of the flywheel 10. The reason for installing the second optical fiber 32 to the fixed element 30 in the system, apart from the first optical fiber 22, is that the first optical fiber 22 rotates together with the flywheel 10 and the rotating shaft 12. Thus, it cannot be connected directly to the data processing unit 40. Also, such an arrangement of the first and second optical fibers 22 and 32 is available because a typical optical fiber has a feature that it can transmit and receive light signals to and from the other optical fiber, which is disposed apart therefrom.

The data processing unit 40 comprises: a broadband light source (not shown) for emitting light at a wide frequency range, to which the second optical fiber 32 is connected; a light-receiving means (not shown) for receiving the light reflected from the FBG sensor 20 and converting the received light into electric signals; an optical coupler (not shown) which is connected to the second optical fiber 32 for passing the light from the broadband light source through the second optical fiber 32 and for passing the light reflected from the FBG sensor 20 toward the light-receiving means; and an analyzing portion (not shown) for receiving the signals from the light-receiving means and analyzing the signals to calculate the deformation of the flywheel 10. Since the structure and deformation detecting process of the data processing unit 40 are well known to a person skilled in the art, the explanation thereof is omitted herein.

On the other hand, the misalignment of two opposed ends of the first and second optical fibers 22 and 32 may occur by vibration due to the rotation of the rotating shaft 12, thereby causing the signal transmission to be interrupted. In order to prevent this problem, collimating and focusing means 26 are mounted to two opposed ends of the first and second optical fibers 22 and 32. The collimating and focusing means 26 may be embodied in a gradient-index (GRIN) rod lens or a C-lens. Since these lenses are well known to a person skilled in the art of optics, the description thereof is omitted herein.

Hereinafter, the operational effect of the monitoring device for a rotating body will be described.

The light emitted from the broadband light source in the data processing unit 40 passes through the second optical fiber 32 and is transformed parallel via the collimating and focusing means 26 mounted at the fixed element 30. Then, the parallel light progresses from the fixed element 30 toward the rotating shaft 12 across the gap therebetween. The parallel light is focused on the end of the first optical fiber 22 of the FBG sensor 20 via the collimating and focusing means 26 mounted at the rotating shaft 12 and passes through the first optical fiber 22.

The light having the frequencies satisfying the above-described Bragg conditions is reflected from the Bragg gratings 24. However, the light having other frequencies passes through the Bragg gratings 24. If the flywheel 10 is deformed, the Bragg gratings 24 are also deformed. This causes the frequencies of light, which can be reflected from the Bragg gratings 24, to be varied corresponding to the deformation of the Bragg gratings 24. The light reflected from the Bragg gratings 24 passes through the first optical fiber 22 and is transformed into parallel via the collimating and focusing means 26 mounted at the rotating shaft 12. The parallel light progresses toward the fixed element 30 across the gap between the rotating shaft 12 and the fixed element 30. The parallel light is focused on the second optical fiber 32 via the collimating and focusing means 26 mounted at the fixed element 30 and transmitted to the light-receiving means in the data processing unit 40 through the second optical fiber 32. The light-receiving means converts the received light into electric signals and transfers the signals to the analyzing portion. The analyzing portion calculates the deformation of the flywheel 10 based upon the signals.

In the above-described example (with reference to Fig. 1), the first optical fiber 22 is inserted into the through-hole 14 that is formed at the central portion of the rotating shaft 12 along its central axis. However, when the rotating shaft 12 is relatively long, it is so difficult to form the through-hole 14 axially throughout the rotating shaft 12 at its central portion, into which the first optical fiber 22 is fittingly inserted. In this case, as shown in Fig. 2, a slot 12a is formed axially at the outer surface of the rotating shaft 12 from a point in conjunction with the flywheel 10 to a point adjacent to the end of the rotating shaft 12. Further, a guide hole 12b is formed to communicate with the end of the slot 12a and extend toward the collimating and focusing means 26 mounted at the end of the rotating shaft 12. Therefore, the first optical fiber 22 of the FBG sensor 20 adhered to the flywheel 10 extends along the rotating shaft 12 while being bonded or fitted in the slot 12a. It is then inserted into the guide hole 12b. The slot 12a prevents the interference between the first optical fiber 22 and the bearing 28, thus ensuring the smooth rotation of the shaft 12.

As shown in Fig. 3, if the rotating shaft 12 is not supported by any bearing, only the guide hole 12b is formed, which extends from a circumferential point adjacent to the end of the rotating shaft 12 to the collimating and focusing means 26, without forming the slot 12a (*see* Fig. 2). Therefore, the first optical fiber 22 of the FBG sensor 20 adhered to the flywheel 10 extends along the rotating shaft 12 while being bonded on the outer surface of the rotating shaft 12. It is then inserted into the guide hole 12b.

If the slot 12a or the guide hole 12b cannot be formed at the rotating shaft 12, then an additional accommodating member 16 equipped with the collimating and focusing means 26 at its central portion may be coupled to the end of the rotating shaft 12 (as shown in Fig. 4). The first optical fiber 22 of the FBG sensor 20 adhered to the flywheel 10 extends along the rotating shaft 12 while being bonded on the outer surface of the rotating shaft 12. It is then guided into the accommodating member 16 toward the collimating and focusing means 26.

### Industrial Applicability

As described above in detail, a monitoring device for a rotating body according to the present invention is configured to accurately detect defects or breakdowns of a rotating body during operation by adhering a FBG sensor to a rotating body, and by further installing another optical fiber to any fixed element for transmitting and receiving light to and from the FBG sensor.

Further, since the FBG sensor is too thin and light to affect the rotation of the rotating body, the installation process is simple and the operational reliability is enhanced.

The present invention may be embodied in other specific forms without departing from its essential characteristics. The described embodiments are to be considered in all respects only as illustrative, and not restrictive. The scope of the invention is, therefore, indicated by the appended claims, rather than by the foregoing description.

## Claims

1. A monitoring device for a rotating body (10) supported by a rotating shaft (12) mounted rotatably with respect to a fixed element (30), one end of the rotating shaft (12) and one end of the fixed element (30) being opposed to each other, comprising:
a fiber Bragg grating sensor (20) mounted to the rotating body (10) and extending toward the one end of the rotating shaft (12) so that one end of the fiber Bragg grating sensor (20) is positioned at a center of the one end of the rotating shaft (12), the fiber Bragg grating sensor (20) reflecting light with frequencies corresponding to deformation of the rotating body (10);
an optical fiber (32), one end of the optical fiber (32) being positioned at the one end of the fixed element (30), the optical fiber (32) extending outward of the fixed element (30); and
a data processing unit (40) comprising a broadband light source for emitting light to the optical fiber (32), the optical fiber (32) being connected to the broadband light source, the data processing unit (40) receiving the light reflected from the fiber Bragg grating sensor (20) via the optical fiber (32) and calculating the deformation of the rotating body (10) based upon the reflected light;
**characterized by**
collimating and focusing means (26) provided at the one end of the rotating shaft (12) and the one end of the fixed element (30) respectively, the collimating and focusing means (26) provided at the one end of the rotating shaft (12) focusing light on the one end of the fiber Bragg grating sensor (20) and transforming light progressing to the collimating and focusing means (26) provided at the one end of the fixed element (30) into parallel, the collimating and focusing means (26) provided at the one end of the fixed element (30) focusing light on the one end of the optical fiber (32) and transforming light progressing to the collimating and focusing means (26) provided at the one end of the rotating shaft (12) into parallel;
wherein the light reflected from the fiber Bragg grating sensor (20) is transmitted from the collimating and focusing means (26) provided at the one end of the rotating shaft (12) to the collimating and focusing means (26) provided at the one end of the fixed element (30) across a gap between the rotating shaft (12) and the fixed element (30) and is then transmitted to the optical fiber (32),
wherein the fiber Bragg grating sensor (20) extends toward the one end of the rotating shaft (12) while being bonded on an outer surface of the rotating shaft (12), and
wherein an accommodating member (16) is coupled to the one end of the rotating shaft (12), the accommodating member (16) guiding the fiber Bragg grating sensor (20) thereinto so that the one end of the fiber Bragg grating sensor (20) is positioned at the center of the rotating shaft (12), wherein the accommodating member (16) is equipped with the collimating and focusing means (26) of the one end of the rotating shaft (12).

## Patentansprüche

1. Überwachungseinrichtung für einen rotierenden Körper (10), der von einer rotierenden Welle (12) gehalten wird, die in Bezug auf ein festes Element (30) drehbar angebracht ist, wobei ein Ende der rotierenden Welle (12) und ein Ende des festen Elements (30) einander gegenüberliegen, umfassend
einen Faser-Bragg-Gitter-Sensor (20), der am rotierenden Körper (10) angebracht ist und sich derart zu dem einen Ende der rotierenden Welle (12) erstreckt, dass ein Ende des Faser-Bragg-Gitter-Sensors (20) in einer Mitte des einen Endes der rotierenden Welle (12) positioniert ist, wobei der Faser-Bragg-Gitter-Sensor (20) Licht mit Frequenzen reflektiert, die der Verformung des rotierenden Körpers (10) entsprechen;
eine Lichtleitfaser (32), wobei ein Ende der Lichtleitfaser (32) an dem einen Ende des festen Elements (30) positioniert ist, wobei sich die Lichtleitfaser (32) aus dem festen Element (30) heraus erstreckt; und
eine Datenverarbeitungseinheit (40), die eine Breitbandlichtquelle zum Ausstrahlen von Licht zu der Lichtleitfaser (32) umfasst, wobei die Lichtleitfaser (32) mit der Breitbandlichtquelle verbunden ist, wobei die Datenverarbeitungseinheit (40) das Licht, das von dem Faser-Bragg-Gitter-Sensor (20) reflektiert wird, über die Lichtleitfaser (32) empfängt und auf Basis des reflektierten Lichts die Verformung des rotierenden Körpers (10) berechnet;
**gekennzeichnet durch**
Kollimierungs- und Fokussierungsmittel (26), die jeweils an dem einen Ende der rotierenden Welle (12) und an dem einen Ende des festen Elements (30) bereitgestellt sind, wobei das Kollimierungs- und Fokussierungsmittel (26), das an dem einen Ende der rotierenden Welle (12) bereitgestellt ist, Licht auf das eine Ende des Faser-Bragg-Gitter-Sensors (20) fokussiert und Licht, das zu dem Kollimierungs- und Fokussierungsmittel (26), welches an dem einen Ende des festen Elements (30) bereitgestellt ist, verläuft, in paralleles Licht umwandelt, wobei das Kollimierungs- und Fokussierungsmittel (26), das an dem einen Ende des festen Elements (30) bereitgestellt ist, Licht auf das eine Ende der Lichtleitfaser (32) fokussiert und Licht, das zu dem Kollimierungs- und Fokussierungsmittel (26), welches an dem einen Ende der rotierenden Welle (12) bereitgestellt ist, verläuft, in paralleles Licht umwandelt;
wobei das Licht, das von dem Faser-Bragg-Gitter-Sensor (20) reflektiert wird, von dem Kollimierung- und Fokussierungsmittel (26), das an dem einen Ende der rotierenden Welle (12) bereitgestellt ist, über einen Spalt zwischen der rotierenden Welle (12) und dem festen Element (30) zu dem Kollimierungs- und Fokussierungsmitte (26), das an dem einen Ende des festen Elements (30) bereitgestellt ist, übertragen wird und dann zu der Lichtleitfaser (32) übertragen wird,
wobei sich der Faser-Bragg-Gitter-Sensor (20) zu dem einen Ende der rotierenden Welle (12) erstreckt, während er an eine Außenfläche der rotierenden Welle (12) gebondet ist; und
wobei ein Aufnahmeelement (16) mit dem einen Ende der rotierenden Welle (12) gekoppelt ist, wobei das Aufnahmeelement (16) den Faser-Bragg-Gitter-Sensor (20) derart in sich einleitet, dass das eine Ende des Faser-Bragg-Gitter-Sensors (20) in der Mitte der rotierenden Welle (12) positioniert ist, wobei das Aufnahmeelement (16) mit dem Kollimierungs- und Fokussierungsmittel (26) des einen Endes der rotierenden Welle (12) ausgerüstet ist.

## Revendications

1. Dispositif de contrôle pour un corps en rotation (10), supporté par un arbre en rotation (12), monté rotatif par rapport à un élément fixe (30), une extrémité de l'arbre en rotation (12) et une extrémité de l'élément fixe (30) étant en opposition l'une par rapport à l'autre, comprenant :
un capteur à fibres à réseaux de Bragg (20) monté sur le corps en rotation (10) et s'étendant en direction de ladite une extrémité de l'arbre en rotation (12) de telle sorte qu'une extrémité du capteur à fibres à réseaux de Bragg (20) est positionnée au niveau d'un centre de ladite une extrémité de l'arbre en rotation (12), le capteur à fibres à réseaux de Bragg (20) réfléchissant la lumière à des fréquences correspondant à la déformation du corps en rotation (10) ;
une fibre optique (32), une extrémité de la fibre optique (32) étant positionnée au niveau de ladite une extrémité de l'élément fixe (30), la fibre optique (32) s'étendant vers l'extérieur par rapport à l'élément fixe (30) ; et
une unité de traitement de données (40) comprenant une source de lumière à large bande pour émettre de la lumière vers la fibre optique (32), la fibre optique (32) étant connectée à la source de lumière à large bande, l'unité de traitement de données (40) recevant la lumière réfléchie depuis le capteur à fibres à réseaux de Bragg (20) via la fibre optique (32) et calculant la déformation du corps en rotation (10) à partir de la lumière réfléchie ;
**caractérisé par**
des moyens de collimation et concentration (26) prévus, respectivement, au niveau de ladite une extrémité de l'arbre en rotation (12) et de ladite une extrémite de l'élément fixe (30), les moyens de collimation et concentration (26) prévus au niveau de ladite une extrémité de l'arbre en rotation (12) concentrant la lumière sur ladite une extrémité du capteur à fibres à réseaux de Bragg (20) et transformant en un faisceau parallèle la lumière progressant vers les moyens de collimation et concentration (26) prévus au niveau de ladite une extrémité de l'élément fixe (30), les moyens de collimation et concentration (26) prévus au niveau de ladite une extrémité de l'élément fixe (30) concentrant la lumière sur ladite une extrémité de la fibre optique (32) et transformant en un faisceau parallèle la lumière progressant vers les moyens de collimation et concentration (26) prévus au niveau de ladite une extrémité de l'arbre en rotation (12) ;
la lumière réfléchie depuis le capteur à fibres à réseaux de Bragg (20) étant transmise depuis les moyens de collimation et concentration (26) prévus au niveau de ladite une extrémité de l'arbre en rotation (12) vers les moyens de collimation et concentration (26) prévus au niveau de ladite une extrémité de l'élément fixe (30) d'un côté à l'autre d'un espace entre l'arbre en rotation (12) et l'élément fixe (30), et étant ensuite transmise à la fibre optique (32) ;
le capteur à fibres à réseaux de Bragg (20) s'étendant en direction de ladite une extrémité de l'arbre en rotation (12) tout en étant lié à une surface extérieure de l'arbre en rotation (12), et
un élément d'adaptation (16) étant couplé à ladite une extrémité de l'arbre en rotation (12), l'élément d'adaptation (16) guidant le capteur à fibres à réseaux de Bragg (20) jusque dans celui-ci, de telle sorte que ladite une extrémité du capteur à fibres à réseaux de Bragg (20) est positionnée au niveau du centre de l'arbre en rotation (12), l'élément d'adaptation (16) étant équipé des moyens de collimation et concentration (26) de ladite une extrémité de l'arbre en rotation (12).
